(19) Europäisches Patentamt
European Patent Office
Office européen des brevets

(11) **EP 2 991 145 A1**

(12) **EUROPÄISCHE PATENTANMELDUNG**

(43) Veröffentlichungstag:
02.03.2016 Patentblatt 2016/09

(21) Anmeldenummer: 14182865.7

(22) Anmeldetag: **29.08.2014**

(51) Int Cl.:
*H01M 8/06* (2006.01)          *C25B 1/02* (2006.01)
*C25B 1/04* (2006.01)          *C25B 1/28* (2006.01)
*C25B 1/30* (2006.01)          *H01M 8/04* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Clariant International Ltd.
4132 Muttenz (CH)**

(72) Erfinder: **Metz, Hans Joachim
6o489 Frankfurt am Main (DE)**

(74) Vertreter: **Jacobi, Markus Alexander
Isenbruck Bösl Hörschler LLP
Eastsite One
Seckenheimer Landstrasse 4
68163 Mannheim (DE)**

(54) **Verfahren zur Speicherung elektrischer Energie**

(57) Die Erfindung betrifft ein Verfahren zur Speicherung von elektrischer Energie umfassend die Schritte:
a) Erzeugen von Wasserstoff ($H_2$) mittels Elektrolyse unter Einsatz von elektrischer Energie,
b) Speichern der Elektrolyseprodukte,
c) Erzeugen von elektrischer Energie unter Einsatz der gespeicherten Elektrolyseprodukte,
wobei sowohl der als kathodisches Elektrolyseprodukt entstehende Wasserstoff als auch das anodische Elektrolyseprodukt in Schritt b) gespeichert werden, wobei das anodische Elektrolyseprodukt in einer Form gespeichert wird, so dass es bei Standardbedingungen von 20°C und 1 bar Druck in flüssiger oder gelöster Form vorliegt, und die Elektrolyseprodukte in Schritt c) zum Erzeugen elektrischer Energie verwendet werden.

EP 2 991 145 A1

**Beschreibung**

Die Erfindung betrifft ein Verfahren zum Speichern elektrischer Energie, bei dem Elektrolyseprodukte mittels elektrischer Energie erzeugt werden, die Elektrolyseprodukte gespeichert werden und aus den gespeicherten Elektrolyseprodukten wieder elektrische Energie erzeugt wird.

Stand der Technik

Die typischen Techniken zum Erzeugen erneuerbarer Energien aus der Sonneneinstrahlung und auch Windkraftwerke sind von der Verfügbarkeit von Wind bzw. Sonne abhängig. Dadurch eignen sich auf diesen Techniken basierende Kraftwerke nicht zum Bereitstellen der Grundlast und auch nicht zum Ausgleichen der wechselnden Lasten im Stromnetz. Wenn der gesamte Energiebedarf durch Wind und Sonne gedeckt werden soll, muss daher eine Möglichkeit bereitgestellt werden, große Mengen an elektrischer Energie zwischen zu speichern. Bisher wird dies hauptsächlich über Pumpspeicherkraftwerke erreicht, ein weiterer Ausbau solcher Speicher ist jedoch mangels geeigneter Standorte oftmals nicht möglich. Weitere Möglichkeiten zur Energiespeicherung umfassen Akkumulatoren, die jedoch sehr teuer sind und nur eine vergleichsweise geringe Speicherkapazität aufweisen.

Eine andere Form der Energiespeicherung ist die Speicherung in Form von Wasserstoff ($H_2$), wobei der Wasserstoff bei Bedarf wieder zur Erzeugung von elektrischer Energie verwendet wird, beispielsweise in einer Brennstoffzelle. Steht überschüssige elektrische Energie, die zurzeit nicht in das Stromnetz eingespeist werden kann, zur Verfügung, kann diese zur Erzeugung von Wasserstoff mittels Elektrolyse verwendet werden. Vielfach wird dazu Wasserelektrolyse betrieben, bei der Wasser ($H_2O$) in Wasserstoff ($H_2$) und Sauerstoff ($O_2$) aufgespalten wird:

$$2H_2O \rightarrow O_2 + 4H^+ + 4e^-$$

Dieser Prozess ist eine Vier-Elektronen-Oxidation, da der Sauerstoff als $O_2$, also als Sauerstoffgas abgegeben wird. Bei der Durchführung dieses Prozesses wird die Energieeffizienz von verschiedenen Faktoren wie Ohm'sche Verluste, Überpotentiale, Faraday-Verluste und Verluste beim Massentransport begrenzt.

Verluste durch Überpotentiale treten am Übergang zwischen den Elektroden und dem Elektrolyt auf. Aufgrund von kinetischer Hemmung an den Elektroden laufen die Prozesse nicht bei den aufgrund thermodynamischer Betrachtungen ermittelten Potentialen ab, sondern erst bei einem erhöhten Potential. Die Überpotentiale sind bei Gasbildungen an den Elektroden mitunter beträchtlich, wobei die mit dem Überpotential aufgebrachte Energie in Form von Wärme verloren geht. Bei der Wasserelektrolyse ist insbesondere eine geringe Aktivität an der Anode eine Quelle für Überpotentiale. Die Überspannung ist abhängig von der Elektrode und der Stromstärke.

Unter Faraday-Verluste werden Verluste zusammengefasst die dadurch entstehen, dass nicht das gewünschte Elektrolyseprodukt, sondern andere Nebenprodukte entstehen.

Unter Verluste beim Massentransport werden Verluste verstanden, die durch den Transport der Masse innerhalb des Elektrolyseurs entstehen. Beispielsweise werden Pumpen benötigt, die an dem Prozess beteiligten flüssigen oder gasförmigen Substanzen zu- und abzuführen. Bei der Elektrolyse von Wasser liegen die beiden Elektrolyseprodukte in einem gasförmigen Zustand vor, so dass weitere Energie aufgewendet werden muss, um z.B. den Wasserstoff zu komprimieren oder zu verflüssigen. In der Regel wird der Sauerstoff wegen des hohen Energiebedarfs für das Komprimieren nicht gespeichert, sondern in die Atmosphäre abgegeben. Wird anschließend aus dem Wasserstoff in einer Brennstoffzelle wieder elektrischer Strom produziert, wird der fehlende Sauerstoff aus der Luft entnommen. Da der Sauerstoffgehalt in der Luft nur etwa 21% beträgt, müssen hierzu große Mengen an Luft der Brennstoffzelle zugeführt werden und der Wirkungsgrad sinkt.

Die Ohm'schen Verluste umfassen alle durch den elektrischen Widerstand verursachten Verluste. Diese Verluste sind insbesondere dann groß, wenn geringe Spannungen und große Ströme verwendet werden.

Nachteilig an einer Speicherung von elektrischer Energie durch Erzeugung von Wasserstoff mittels Wasserelektrolyse ist der vergleichsweise geringe Wirkungsgrad der Elektrolyse und anschließender Stromerzeugung mit einer Brennstoffzelle. Der Wirkungsgrad wird durch mehrere Faktoren beeinträchtigt. Zum einen entstehen bei der Wasserelektrolyse gasförmige Elektrolyseprodukte (Sauerstoff und Wasserstoff), was mit hohen Überpotentialen an den Elektroden verbunden ist. Zum anderen wird üblicherweise der Sauerstoff an die Atmosphäre abgegeben und nicht gespeichert, so dass bei der späteren Energieerzeugung der Wasserstoff mit Luftsauerstoff umgesetzt werden muss.

Aus DE 29 43 575 ist ein Verfahren zur Herstellung von Wasserstoffgas bekannt, bei dem Sonnenenergie mittels Photoelektrolyse gespeichert wird. Mithilfe der Sonnenenergie wird dabei Bromwasserstoff bei der Elektrolyse in Wasserstoff und flüssiges Brom umgesetzt. Sowohl der Wasserstoff als auch das Brom können zum Betrieb einer Brennstoffzelle genutzt werden, um aus den erzeugten Elektrolyseprodukten elektrische Energie zu erzeugen. Im Vergleich zur Wasserelektrolyse treten dabei nur geringe Überspannungen auf und beide Elektrolyseprodukte können verwertet werden.

Nachteilig hierbei ist, dass eine Photoelektrolyse durchgeführt wird, so dass eine effiziente Speicherung von elektrischer Energie, beispielsweise aus Windkraft, nicht ohne weiteres möglich ist.

Aus dem Stand der Technik sind eine Vielzahl von weiteren Elektrolyseverfahren mit verschiedenen Edukten und Produkten bekannt. Beispielsweise aus US 2004/0126313 ist ein Verfahren zur industriellen Herstellung von Wasserstoffperoxid bekannt, bei dem mittels Elektrolyse einer Schwefelsäurelösung Peroxidisulfate erzeugt und mittels Hydrolyse in Wasserstoffperoxid umgewandelt werden.

Offenbarung der Erfindung

Es wird ein Verfahren zur Speicherung elektrischer Energie vorgeschlagen, umfassend die Schritte:

a) Erzeugen von Wasserstoff ($H_2$) mittels Elektrolyse unter Einsatz von elektrischer Energie,
b) Speichern der Elektrolyseprodukte,
c) Erzeugen von elektrischer Energie unter Einsatz der gespeicherten Elektrolyseprodukte,

wobei sowohl der als kathodisches Elektrolyseprodukt entstehende Wasserstoff als auch das anodische Elektrolyseprodukt in Schritt b) gespeichert werden und wobei das anodische Elektrolyseprodukt in einer Form gespeichert wird, so dass es bei Standardbedingungen von 20°C und 1 bar Druck in flüssiger oder gelöster Form vorliegt, und die Elektrolyseprodukte in Schritt c) zum Erzeugen elektrischer Energie verwendet werden.

Gegenstand ist insbesondere ein Verfahren, dadurch gekennzeichnet, dass die Elektrolyse gemäß Schritt a) als zwei-Elektronen Elektrolyse ausgeführt ist, wobei an der Anode ein Peroxid entsteht.

Gegenstand ist insbesondere ein Verfahren, bei dem in Schritt a) eine Elektrolyse von Schwefelsäure ($H_2SO_4$) oder Ammoniumhydrogensulfat ($NH_4HSO_4$) durchgeführt wird.

Gegenstand ist insbesondere ein Verfahren wie beschrieben, wobei in Schritt a) eine Elektrolyse von Phosphorsäure ($H_3PO_4$) oder Phosphaten durchgeführt wird.

Gegenstand ist insbesondere ein Verfahren wie beschrieben, bei dem zur Erzeugung der Elektrischen Energie gemäß Schritt c) Wasserstoff als kathodisches Produkt mit dem anodischen Produkt als Oxidationsmittel in einer Brennstoffzelle umgesetzt wird.

Gegenstand ist insbesondere ein Verfahren, bei dem zur Erzeugung der Elektrischen Energie gemäß Schritt c) Wasserstoff als kathodisches Elektrolyseprodukt mit Wasserstoffperoxid als Oxidationsmittel in einer Brennstoffzelle umgesetzt wird, wobei Wasserstoffperoxid aus dem anodischen Elektrolyseprodukt mittels Hydrolyse erzeugt wird.

Gegenstand ist insbesondere ein Verfahren, bei dem Wasserstoffperoxid aus dem anodischen Elektrolyseprodukt mittels Hydrolyse erzeugt wird, und aus dem erzeugten Wasserstoffperoxid unter Wärmeentwicklung Sauerstoff und Wasser erzeugt werden, wobei der Sauerstoff als Oxidationsmittel in der Brennstoffzelle eingesetzt wird und die entstehende Wärme ebenfalls zur Energieerzeugung genutzt wird.

Gegenstand ist insbesondere ein Verfahren wie beschrieben, bei dem Wasserstoffperoxid aus dem anodischen Elektrolyseprodukt mittels Hydrolyse erzeugt wird und Wasserstoff mit des Wasserstoffperoxids als Oxidationsmittel verbrannt wird, wobei die entstehende Wärme über eine Turbine und einen Generator in elektrische Energie umgesetzt wird.

Im ersten Schritt a) des Verfahrens wird eine Elektrolyse durchgeführt, wobei insbesondere elektrische Energie zur Erzeugung der Elektrolyseprodukte eingesetzt wird. An der Kathode entsteht bei der Elektrolyse Wasserstoffgas ($H_2$) der gemäß Schritt b) des Verfahrens gespeichert wird. Dazu kann das Wasserstoffgas beispielsweise komprimiert und in Druckbehältern gelagert werden. Ebenso wäre es denkbar, falls das Erzeugen der elektrischen Energie gemäß Schritt c) an einem anderen Ort durchgeführt werden soll, den Wasserstoff für den Transport zu verflüssigen oder den Wasserstoff über eine Pipeline im gasförmigen Zustand zu transportieren.

In der vorliegenden Beschreibung wird mit dem Begriff kathodisches Elektrolyseprodukt das bei der Elektrolyse an der Kathode entstehende Produkt verstanden. Mit dem Begriff anodisches Elektrolyseprodukt wird das an der Anode entstehende Produkt bezeichnet. Die Elektrolyse wird so ausgeführt, dass an der Anode kein Gas entsteht, wie z.B. Sauerstoff ($O_2$) bei der Wasserelektrolyse, sondern ein Elektrolyseprodukt, welches unter Standardbedingungen, d.h. einer Temperatur von 20°C und 1 bar Druck, in flüssiger Form vorliegt. Alternativ wird die Elektrolyse so ausgeführt, dass das an der Anode entstehende Elektrolyseprodukt in einem Lösungsmittel gelöst wird, so dass es zusammen mit dem Lösungsmittel ebenfalls leicht transportiert werden kann. Dadurch erübrigt sich ein energieaufwendiges Komprimieren des anodischen Elektrolyseprodukts, was eine Lagerung oder auch einen Transport vereinfacht. Hierbei wird unter "in flüssiger Form" sowohl ein flüssiges Elektrolyseprodukt als auch ein in einer Flüssigkeit gelöstes Elektrolyseprodukt verstanden.

Das in flüssiger Form bzw. in gelöster Form vorliegende Elektrolyseprodukt kann leicht in Tanks gespeichert werden. Für die Speicherung wird keinerlei zusätzliche Energie benötigt, da eine Flüssigkeit im Gegensatz zu einem Gas nicht komprimiert oder verflüssigt werden muss. Auch lässt sich das Elektrolyseprodukt in flüssiger Form bei Bedarf leicht Transportieren, beispielsweise mittels Rohrleitungen oder Tankwagen. Somit ist es denkbar, den nachfolgenden Schritt c) je nach Ausführungsform des Verfahrens an einem anderen Standort auszuführen, wie den Schritt a) des Verfahrens.

Im Schritt c) des Verfahrens werden die Elektrolyseprodukte genutzt, um wieder elektrische Energie zu erzeugen. Dazu kann beispielsweise eine Brennstoffzelle verwendet werden, der die beiden Elektrolyseprodukte zugeführt werden. Ebenso wäre es denkbar, den Wasserstoff unter Zugabe des anodischen Elektrolyseprodukts als Oxidationsmittel zu verbrennen und mit der Wärme eine Wärmekraftmaschine wie beispielsweise eine Turbine zu betreiben. Die Turbine wiederum kann dann zum Antreiben eines Generators verwendet werden, um den elektrischen Strom zu erzeugen.

In einer Variante der Erfindung wird der Schritt c) an einem anderen Standort, als der Schritt a) durchgeführt. Dadurch kann mit Hilfe des vorgeschlagenen Verfahrens Energie nicht nur gespeichert, sondern auch an einen anderen Ort transportiert werden. Dabei liegt das anodische Elektrolyseprodukt bereits vorteilhafterweise in flüssiger Form vor und lässt sich so leicht transportieren, beispielsweise mittels Rohrleitungen oder Tankwagen. Nur der Wasserstoff muss für den Transport komprimiert oder verflüssigt werden. Alternativ kann der Wasserstoff auch über eine Pipeline im gasförmigen Zustand transportiert werden.

In einer bevorzugten Ausführungsform der Erfindung ist die Elektrolyse gemäß Schritt a) des Verfahrens als zwei-Elektronen Elektrolyse ausgeführt. Ein Beispiel hierfür wäre im Fall der Wasserelektrolyse das Erzeugen von Wasserstoff ($H_2$) und Wasserstoffperoxid ($H_2O_2$):

$$2H_2O \rightarrow H_2 + H_2O_2$$

wobei der Wasserstoff bei Standardbedingungen gasförmig und das Wasserstoffperoxid flüssig ist.

Bei der Wasserelektrolyse entsteht zwar auch ein kleiner Anteil an Wasserstoffperoxid, jedoch konkurriert dieser Prozess mit der Erzeugung von Sauerstoff, der kinetisch günstiger ist. Daher ist die direkte Erzeugung von Wasserstoffperoxid mittels Wasserelektrolyse ungünstig.

In einer bevorzugten Ausführungsform der Erfindung wird in Schritt a) eine Elektrolyse von Schwefelsäure ($H_2SO_4$) oder Ammoniumhydrogensulfat ($NH_4HSO_4$) durchgeführt.

Bei einer Elektrolyse von Schwefelsäure ($H_2SO_4$) werden aus der Schwefelsäure ($H_2SO_4$) beziehungsweise aus einem entsprechenden Anion Wasserstoff und Peroxodisulfate oder Peroxodischwefelsäure mittels Elektrolyse erzeugt. Beispielsweise können Peroxodisulfate durch eine Elektrolyse von konzentrierter Schwefelsäure erhalten werden:

$$2HSO_4^- \longrightarrow S_2O_8^{2-} + 2H^+ + 2e^-$$

$$2SO_4^{2-} \longrightarrow S_2O_8^{2-} + 2e^-$$

Die Anionen ($SO_4$, $HSO_4$) entstehen dabei durch Deprotonierung aus der Schwefelsäure. Da das anodische Elektrolyseprodukt nicht im gasförmigen Aggregatzustand anfällt, sind die Überpotentiale im Vergleich zur Wasserelektrolyse geringer.

Ein besonders effizientes Verfahren zur elektrolytischen Erzeugung von Peroxodisulfaten ist aus der Veröffentlichung von Serrano et. al. "Electrochemical preparation of peroxodisulfuric acid using boron doped diamond thin film electrodes", Electrochimica Acta, 2002, 48(4), 431-436 bekannt. Dabei wird als Anode eine Bor-dotierte Diamantelektrode (BDD) eingesetzt. Die erreichbare Faraday-Effizienz liegt nach Serrano et al. im Bereich von 75-80%.

Bei dem Verfahren bilden sich Hydroxyradikale, die anschließend mit der Schwefelsäure reagieren:

$$HSO_4^- + OH^\bullet \longrightarrow (SO_4^-)^\bullet + H_2O$$

$$H_2SO_4 + OH^\bullet \longrightarrow (SO_4^-)^\bullet + H_3O^+$$

Anschließend reagieren zwei Sulphatradikale und bilden ein Peroxydisulphate-Ion:

$$(SO_4^-)^\bullet + (SO_4^-)^\bullet \longrightarrow S_2O_8^{2-}$$

Je nach Ausführungsform des Verfahrens können die erhaltenen Peroxydisulphate ($S_2O_8$) als anodisches Elektrolyseprodukt gespeichert und anschließend im Schritt c) des Verfahrens als Oxidationsmittel bei der Energieerzeugung dienen.

In weiteren Ausführungsformen des Verfahrens können die erhaltenen Peroxydisulphate ($S_2O_8$) mittels Hydrolyse zur Erzeugung von Wasserstoffperoxid verwendet werden:

$$S_2O_8^{2-} + H_2O \longrightarrow 2HSO_4^- + H_2O_2$$

Das erzeugte Wasserstoffperoxid wird anschließend gemäß Schritt b) als Produkt gespeichert und in Schritt c) des Verfahrens zur Energieerzeugung eingesetzt. Dabei sind verschiedene Varianten denkbar, wie das Wasserstoffperoxid genutzt werden kann.

In einer Variante werden einer Brennstoffzelle Wasserstoff ($H_2$) und als Oxidationsmittel Wasserstoffperoxid zugeführt. Da das Oxidationsmittel hierbei in flüssiger Form vorliegt, ist es besonders leicht zu handhaben.

In einer anderen Variante wird das Wasserstoffperoxid ($H_2O_2$) unter Wärmeentwicklung zu Wasser ($H_2O$) und Sauerstoff ($O_2$) umgesetzt. Der erhaltene Sauerstoff wird zusammen mit dem gespeicherten Wasserstoff in einer Brennstoffzelle zur Stromerzeugung genutzt. Die Brennstoffzelle arbeitet dabei im Vergleich zu einer Brennstoffzelle die Wasserstoff und Luft umsetzt effizienter, da die Masseverluste geringer sind. Luft enthält nur ca. 21% Sauerstoff, sonst hauptsächlich Stickstoff, so dass etwa die fünffache Menge an Gas der Brennstoffzelle zugeführt werden muss, um die gleiche Menge an Wasserstoff umzusetzen.

Weitere Nachteile ergeben sich durch den geringeren Partialdruck des Sauerstoffs, der zur einem geringeren Potential führt. Auch ergeben sich aufgrund der größeren Gasmengen bauartbedingt ein größeres Zellevolumen und ein höherer Energiebedarf für die Ventilatoren, die zum Transport der Luft benötigt werden.

Bei der Nutzung von Wasserstoffperoxid kann auch die Wärme, die beim Erzeugen des Sauerstoffs aus dem Wasserstoffperoxid entsteht, in weiteren Varianten der Erfindung genutzt werden, beispielsweise in dem eine Turbine mit einem angeschlossenen Generator oder direkt ein Thermoelektrischer Generator betrieben wird. Gegenüber einer Brennstoffzelle die mit Luftsauerstoff betrieben wird, liefert das Wasserstoffperoxid zusätzliche Energie in Form von Wärme, die genutzt werden kann.

In einer weiteren Variante könnte Wasserstoffperoxid zusammen mit Wasserstoff verbrannt werden, wodurch heißer Dampf entsteht. Dieser heiße Dampf kann dann verwendet werden, um eine Dampfturbine anzutreiben, die wiederum über einen Generator zur Stromerzeugung genutzt werden kann. Im Gegensatz zur Verbrennung von Wasserstoff mit Luftsauerstoff können hierbei keinerlei schädlichen Stickoxide entstehen, da bei der Reaktion kein Stickstoff anwesend ist.

Bei Verwendung des Verfahrens in einem Blockheizkraftwerk kann dies vorteilhafterweise mit einer Kraft-Wärme-Kopplung kombiniert werden, um die entstehende Abwärme als Prozesswärme oder als Fernwärme weiter zu verwerten.

In einer weiteren Ausführungsform kann hochkonzentriertes $H_2O_2$ als sogenanntes "Auto-Propellant" genutzt werden, da die Zersetzung zu $H_2O$ und $O_2$ stark exotherm verläuft und zur Erzeugung eines Heißdampf/Sauerstoffgemisches genutzt werden kann.

In einer weiteren Ausführungsform der Erfindung wird in Schritt a) eine Elektrolyse von Phosphorsäure ($H_3PO_4$) oder von Phosphaten durchgeführt.

Hierbei werden aus der Phosphorsäure Wasserstoff und Peroxodiphosphorsäure, Peroxophosphorsäure sowie deren Salze Peroxomonophosphate bzw. Peroxodiphosphate erzeugt.

Ein effizientes Verfahren zur Herstellung von Peroxodiphosphaten verwendet als Anode Bor-dotierte Diamantelektroden und wurde unter anderem beschrieben von Canizares et al. "Electrochemical Synthesis of Peroxodiphospate Using Boron-Doped Diamond Anodes", Journal of The Electrochemical Society, 2005, 152(11) D191-D196. Bei dem Verfahren bilden sich Hydroxyradikale, die anschließend mit den Ionen der Phosphorsäure reagieren:

$$PO_4^{3-} + OH^\bullet \longrightarrow (PO_4^{2-})^\bullet + OH^-$$

Anschließend reagieren zwei Phosphatradikale und bilden ein Peroxodiphosphate-Ion:

$$(PO_4^{2-})^\bullet + (PO_4^{2-})^\bullet \longrightarrow P_2O_8^{4-}$$

Auch in dieser Ausführungsform des Verfahrens liegt das anodische Elektrolyseprodukt vorteilhafterweise nicht in einem gasförmigen Aggregatzustand vor, so dass die Verluste aufgrund von Überpotentialen gering sind.

Die erreichbare Farraday-Effizienz liegt nach Angaben von Canizares et al. ("Influence of the Characteristics of p-Si BDD anodes on the efficiency of peroxodiphosphate electrosynthesis process", Electrochemistry Communications 10 (2008), 602-606) bei über 90%.

Die erzeugten Elektrolyseprodukte werden anschließend gemäß Schritt b) des Verfahrens gespeichert. Wird elektrische Energie benötigt, wird mit Hilfe der Elektrolyseprodukte gemäß Schritt c) wieder elektrische Energie erzeugt. Dazu können beispielsweise der Wasserstoff zusammen mit dem anodischen Elektrolyseprodukt als Oxidationsmittel einer Brennstoffzelle zugeführt werden.

**Patentansprüche**

1. Verfahren zur Speicherung elektrischer Energie umfassend die Schritte:

    a) Erzeugen von Wasserstoff ($H_2$) mittels Elektrolyse unter Einsatz von elektrischer Energie,
    b) Speichern der Elektrolyseprodukte,
    c) Erzeugen von elektrischer Energie unter Einsatz der gespeicherten Elektrolys

    **dadurch gekennzeichnet, dass** sowohl der als kathodisches Elektrolyseprodukt entstehende Wasserstoff als auch das anodische Elektrolyseprodukt in Schritt b) gespeichert werden, wobei das anodische Elektrolyseprodukt in einer Form gespeichert wird, so dass es bei Standardbedingungen von 20°C und 1 bar Druck in flüssiger oder gelöster Form vorliegt, und die Elektrolyseprodukte in Schritt c) zum Erzeugen elektrischer Energie verwendet werden.

2. Verfahren nach Anspruch 1, **dadurch gekennzeichnet, dass** die Elektrolyse gemäß Schritt a) als zwei-Elektronen Elektrolyse ausgeführt ist, wobei an der Anode ein Peroxid entsteht.

3. Verfahren nach Anspruch 2, **dadurch gekennzeichnet, dass** in Schritt a) eine Elektrolyse von Schwefelsäure ($H_2SO_4$) oder Ammoniumhydrogensulfat ($NH_4HSO_4$) durchgeführt wird.

4. Verfahren nach Anspruch 2, **dadurch gekennzeichnet, dass** in Schritt a) eine Elektrolyse von Phosphorsäure ($H_3PO_4$) oder Phosphaten durchgeführt wird.

5. Verfahren nach einem der Ansprüche 1 bis 4, **dadurch gekennzeichnet, dass** zur Erzeugung der Elektrischen Energie gemäß Schritt c) Wasserstoff als kathodisches Produkt mit dem anodischen Produkt als Oxidationsmittel in einer Brennstoffzelle umgesetzt wird.

6. Verfahren nach Anspruch 3, **dadurch gekennzeichnet, dass** zur Erzeugung der Elektrischen Energie gemäß Schritt c) Wasserstoff als kathodisches Elektrolyseprodukt mit Wasserstoffperoxid als Oxidationsmittel in einer Brennstoffzelle umgesetzt wird, wobei Wasserstoffperoxid aus dem anodischen Elektrolyseprodukt mittels Hydrolyse erzeugt wird.

7. Verfahren nach Anspruch 3, **dadurch gekennzeichnet, dass** Wasserstoffperoxid aus dem anodischen Elektrolyseprodukt mittels Hydrolyse erzeugt wird und aus dem erzeugten Wasserstoffperoxid unter Wärmeentwicklung Sauerstoff und Wasser erzeugt werden, wobei der Sauerstoff als Oxidationsmittel in der Brennstoffzelle eingesetzt wird und die entstehende Wärme ebenfalls zur Energieerzeugung genutzt wird.

8. Verfahren nach einem der Ansprüche 1 bis 3, **dadurch gekennzeichnet, dass** Wasserstoffperoxid aus dem anodischen Elektrolyseprodukt mittels Hydrolyse erzeugt wird und Wasserstoff mit des Wasserstoffperoxids als Oxidationsmittel verbrannt wird, wobei die entstehende Wärme über eine Turbine und einen Generator in elektrische Energie umgesetzt wird.

**Europäisches Patentamt**
**European Patent Office**
**Office européen des brevets**

# EUROPÄISCHER RECHERCHENBERICHT

Nummer der Anmeldung

EP 14 18 2865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/080887 A1 (TKADLEC MIKE [US]) 5. April 2012 (2012-04-05) | 1 | INV. H01M8/06 |
| Y | * Absätze [0020] - [0030]; Abbildung 1 * ----- | 2-6,8 | C25B1/02 C25B1/04 |
| Y,D | US 2004/126313 A1 (HAASE RICHARD A [US]) 1. Juli 2004 (2004-07-01) * Absatz [0029] - Absatz [0032]; Abbildung 1 * ----- | 1-3,5-8 | C25B1/28 ADD. C25B1/30 H01M8/04 |
| Y | US 2010/055517 A1 (UZHINSKY IGHOR K [US] ET AL) 4. März 2010 (2010-03-04) * Absätze [0008] - [0011]; Abbildung 1A * ----- | 1-3,5-7 | |
| Y | US 3 616 325 A (MUCENIEKS PAUL R) 26. Oktober 1971 (1971-10-26) * Spalte 2 - Spalte 3 * ----- | 4 | |
| A | US 2014/061023 A1 (HIRABAYASHI HIDEAKI [JP] ET AL) 6. März 2014 (2014-03-06) * Absätze [0019] - [0037], [0091] - [0092], [0122] - [0126]; Abbildungen 1, 9 * ----- | 1-4,8 | RECHERCHIERTE SACHGEBIETE (IPC) |
| A | JP H08 37019 A (TAIMEI KINZOKU KOGYO KK) 6. Februar 1996 (1996-02-06) * Seite 2 - Seite 3; Abbildung 1 * ----- | 1,5-7 | H01M C25B |

Der vorliegende Recherchenbericht wurde für alle Patentansprüche erstellt

| Recherchenort | Abschlußdatum der Recherche | Prüfer |
|---|---|---|
| Den Haag | 20. März 2015 | Hofer, Astrid |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 18 2865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2015

| Im Recherchenbericht angeführtes Patentdokument | Datum der Veröffentlichung | Mitglied(er) der Patentfamilie | Datum der Veröffentlichung |
|---|---|---|---|
| US 2012080887 A1 | 05-04-2012 | KEINE | |
| US 2004126313 A1 | 01-07-2004 | KEINE | |
| US 2010055517 A1 | 04-03-2010 | EP 2318309 A1 | 11-05-2011 |
| | | JP 5342001 B2 | 13-11-2013 |
| | | JP 2012501525 A | 19-01-2012 |
| | | US 2010055517 A1 | 04-03-2010 |
| | | WO 2010027726 A1 | 11-03-2010 |
| US 3616325 A | 26-10-1971 | BE 723930 A | 14-05-1969 |
| | | CH 521924 A | 30-04-1972 |
| | | DE 1809799 A1 | 03-07-1969 |
| | | ES 361138 A1 | 01-08-1970 |
| | | FR 1591504 A | 27-04-1970 |
| | | GB 1236248 A | 23-06-1971 |
| | | NL 6817444 A | 10-06-1969 |
| | | SE 340270 B | 15-11-1971 |
| | | US 3616325 A | 26-10-1971 |
| US 2014061023 A1 | 06-03-2014 | JP 5657620 B2 | 21-01-2015 |
| | | JP 2014047422 A | 17-03-2014 |
| | | US 2014061023 A1 | 06-03-2014 |
| JP H0837019 A | 06-02-1996 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2943575

- US 20040126313 A

**In der Beschreibung aufgeführte Nicht-Patentliteratur**

- **SERRANO.** Electrochemical preparation of peroxo-disulfuric acid using boron doped diamond thin film electrodes. *Electrochimica Acta,* 2002, vol. 48 (4), 431-436
- **CANIZARES et al.** Electrochemical Synthesis of Peroxodiphospate Using Boron-Doped Diamond Anodes. *Journal of The Electrochemical Society,* 2005, vol. 152 (11), D191-D196

- **CANIZARES et al.** Influence of the Characteristics of p-Si BDD anodes on the efficiency of peroxodiphosphate electrosynthesis process. *Electrochemistry Communications,* 2008, vol. 10, 602-606